Europäisches Patentamt

European Patent Office

Office européen des brevets

(19)

(11) Veröffentlichungsnummer: **0 177 726**
**B1**

(12) **EUROPÄISCHE PATENTSCHRIFT**

(45) Veröffentlichungstag der Patentschrift: **31.10.90**

(51) Int. Cl.⁵: **H 05 B 6/50**

(21) Anmeldenummer: **85110586.6**

(22) Anmeldetag: **22.08.85**

(54) **Vorrichtung zum Aufheizen einer Schicht aus dielektrischem Material mittels Hochfrequenz.**

(30) Priorität: **20.09.84 DE 3434605**

(43) Veröffentlichungstag der Anmeldung:
**16.04.86 Patentblatt 86/16**

(45) Bekanntmachung des Hinweises auf die
Patenterteilung:
**31.10.90 Patentblatt 90/44**

(84) Benannte Vertragsstaaten:
**CH DE FR IT LI**

(56) Entgegenhaltungen:
**EP-A-0 098 595**
**BE-A- 498 634**
**DE-B-1 011 544**
**FR-A-1 019 687**
**FR-A-1 139 565**
**GB-A- 694 520**
**US-A-2 563 098**

(73) Patentinhaber: **Siemens Aktiengesellschaft**
**Wittelsbacherplatz 2**
**D-8000 München 2 (DE)**

(72) Erfinder: **Holle, Johannes, Dipl.-Ing.**
**Bröndbystrasse 8**
**D-1000 Berlin 45 (DE)**

Courier Press, Leamington Spa, England.

**Beschreibung**

Die vorliegende Erfindung betrifft eine Vorrichtung zum Aufheizen einer Schicht aus dielektrischem Material mittels Hochfrequenz, bei der ein Hochfrequenzgenerator über eine Koaxialleitung mit einem niederohmigen Verbraucher verbunden ist.

Derartige Vorrichtungen sind bekannt und beispielsweise zum Trocknen von Leder eingesetzt. Hierbei besteht der Verbraucher aus zwei Elektroden, die einen Kondensator bilden. Es hat sich jedoch herausgestellt, daß bei großflächigen und elektrisch sehr niederohmigen Einrichtungen außerordentlich große Ströme notwendig sind, um den gewünschten Effekt zu erzielen. Zur Erleichterung werden daher dem Verbraucher eine oder mehrere Induktivitäten parallelgeschaltet, die mit dem kapazitiven Verbraucherwiderstand einen hochohmigen Parallelresonanzkreis bilden. Der aus dem Verbraucher und den parallelgeschalteten Induktivitäten gebildete Kreis ändert sich jedoch beim Betrieb der Vorrichtung während des Aufheizvorganges bezüglich seiner Resonenzfrequenz. Dies erfordert eine Nachregelung des generalseitigen und/oder verbraucherseitigen Parallelresonanzkreises.

Es ist weiterhin bekannt, einem Verbraucher mit kapazitivem Widerstandsanteil unter Bildung eines bei der Arbeitsfrequenz des Hochfrequenzgenerators wirksamen Resonanzkreises eine Induktivität in Reihe zu schalten und diesen Serienresonanzkreis über eine Koaxialleitung an die Spule des Prallelresonanzkreises des Hochfrequenz-Generators anzukoppeln. Für die Arbeitsfrequenz des Hochfrequenzgenerators wird in diesem Fall der Blindwiderstand des Verbrauchers kompensiert. Auch kann man einen gleichartigen Verbraucher ohne zusätzliche Schaltungselemente mittels einer etwa λ/4-langen Koaxialleitung an die Spule des Parallelschwingkreises des HF-Generators ankoppeln, wobei jeweils mittels der gewählten Ankopplung eine Transformation des Verbraucherwiderstandes erfolgt (FR—C—1 139 565).

Der Erfindung liegt die Aufgabe zugrunde, die bekannt Vorrichtung so zu modifizieren, daß in Folge einer Vereinfachung der Ankopplung des Verbrauchers diesem eine möglichst große Hochfrequenzleistung zur Verfügung steht.

Zur Lösung dieser Aufgabe ist bei einer Vorrichtung der eingangs erwähnten Art—deren Zuleitung als Koaxialleitung ausgebildet ist und bei der zwischen die Koaxialleitung und den Verbraucher eine Serieninduktivität geschaltet ist, die den kapazitiven Anteil des Widerstandes des Verbrauchers bei der Arbeitsfrequenz des HF-Generators kompensiert—vorgesehen, daß die Koaxialleitung eine länge von einem Viertel der Wellenlänge der Arbeitsfrequenz des HF-Generators bzw. ein ungeradzahliges Vielfaches davon aufweist und daß die Koaxialleitung ohne Zwischenschaltung eines Parallelresonanzkreises direkt an die HF-Generatorröhre angeschlossen ist.

Bei einer derartigen Ausgestaltung der Vorrichtung wird nur noch der reelle Widerstand des Verbrauchers mittels der Koaxialleitung mit dem Quadrant des Wellenwiderstandes der Koaxialleitung auf das generatorseitige Ende der Koaxialleitung als Arbeitswiderstand der Generatorröhre transformiert, weil der hinsichtlich des Blindwiderstandanteils kompensierte niederohmige Verbraucher wie ein Kurzschluß wirkt und demzufolge die λ/4-lange Axialleitung einen Resonator bilder, der generatorseitig wie ein Parallelresonanzkreis wirkt. Demzufolge bestimmt die Resonanzfrequenz der Koaxialleitung die Arbeitsfrequenz des HF-Generators. Eine Änderung des kapazitiven Anteils des Verbraucherwiderstandes während des Arbeitsablaufes wirkt sich daher nur unwesentlich auf die Resonanzfrequenz des wirksamen Arbeitswiderstandes des HF-Generators aus. Daher ist die im reellen Verbraucherwiderstand umgesetzte Leistung im Vergleich zur aufgewendeten Generatorleistung stets optimal.

Dies ist besonders bei der Trocknung von feuchten Dielektrika, z.B. von Leder, von großer Bedeutung, weil bei derartigen Vorgängen relativ kurze Trockenzeiten zwischen zwei bis sechs Minuten üblich sind und in dieser Trockzeit eine beträchtliche Änderung der Resonanzfrequenz stattfindet. Mit herkömmlichen Anlagen macht die Nachregelung der Resonanzfrequenz bei derartigen Vorgängen erhebliche Schwierigkeiten und löst wegen der erforderlichen Umschaltvorgänge erhebliche Störungen aus, die auch auf das Leitungsnetz zurückwirken und erhebliche Entstörmittel erforderlich machen. Diese Störungen entfallen beim erfindungsgemäßen Aufbau, da hier Blindwiderstände nicht zur Wirkung kommen.

Die Erfindung zeigt einen weiteren wesentlichen Vorteil gegenüber dem Stand der Technik. Es hat sich nämlich außerdem herausgestellt, daß bei Verwendung üblicher Schaltungen Resonanzschwingungen mit einer von der Sollfrequenz verschiedenen Frequenz angeregt werden können die nicht den Verbraucher speisen, wohl aber zu zusätzlichen Störungen führen. Diese unerwünschten Resonanzschwingungen werden durch den erfindungsgemäßen Einsatz einer Koaxialleitung mit der Länge L=λ/4 vermieden. Diese Erfindung eignet sich insbesondere zur Einspeisung von Hochfrequenzenergie in sehr niederohmige Verbraucher mit veränderlichem Blindwiderstand.

Die Dimensionierung der Koaxialleitung ergibt sich aus der Theorie der Koaxialleitungen in Verbindung mit der Vierpoltheorie. Die wesentlichen Beziehungen werden in folgendem anhand von zwei Figuren erläutert.

Fig. 1 zeigt eine Anordnung nach dem Stand der Technik schematisch,

Fig. 2 zeigt eine erfindungsgemäße Anordnung schematisch.

Ein Verbraucher K setzt sich aus Kondensatorelektroden 1 und 2 und dielektrischen Schichten 3 und 4 zusammen. Die dielektrische Schicht 3 soll durch die Hochfrequenz erhitzt werden. Die elektrische Schicht 4 verhindert einen Kurzschluß bei Fehlern in der dielektrischen Schicht 3. Die dielektrische Schicht 4 kann beispielsweise aus Gummi bestehen. Die elektrische Schicht 3 kann eine Lederschicht sein, die getrocknet werden soll. In diesem Fall empfiehlt es sich, in der Elektrode 2 Ausnehmungen vorzusehen, durch die die Feuchte entweichen kann. Anstelle der dielektrischen Schicht 3 können auch zwei oder mehr dielektrische Schichten aus Kunststoff angeordnet werden, welche durch die Hochfrequenz vollflächig miteinander verschweißt werden sollen.

Parallel zu den Kondensatorelektroden 1 und 2 liegt eine Induktivität $L_P$. Diese Induktivität $L_P$ bildet zusammen mit der Kapazität $C_K$ des Verbrauchers K einen Parallelschwingkreis, wodurch der Verbraucherwiderstand hochohmiger geworden und reell ist, solange noch keine Verstimmung vorliegt.

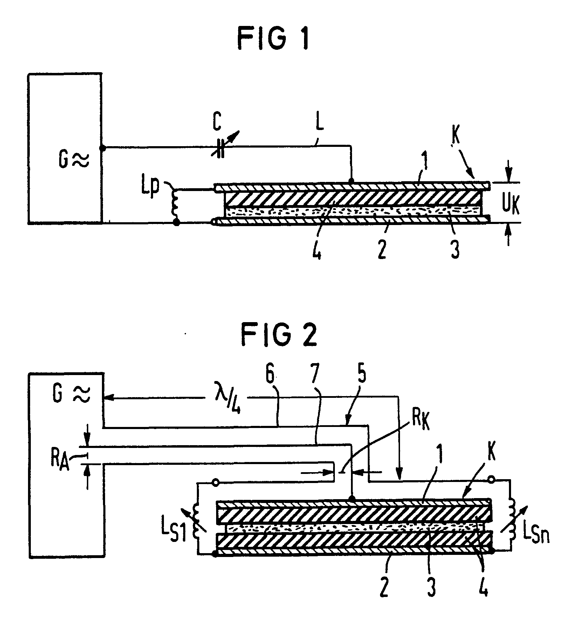

Weiterhin ist ein verstellbarer Kondensator C in die Zuleitung zum Verbraucher K geschaltet. Der Kondensator C bildet zusammen mit der Leitungsinduktivität L einen Serienschwingkreis, so daß die vom Generator eingespeiste Hochfrequenz auf der Zuleitung keinen Blindwiderstand zu überwinden braucht (Fig. 1).

Gemäß Fig. 2 wird die Zuleitung von Hochfrequenzgenerator G zum Verbraucher K durch eine Koaxialleitung 5 mit einem Innenleiter 7 und einem Außenleiter 6 gebildet. Dadurch können der Kondensator C und die Parallelinduktivität $L_P$ entfallen. Lediglich eine veranderbare Serieninduktivität $L_S$ ist zwischen den Verbraucher K und die Koaxialleitung 5 geschaltet. Die Serieninduktivität $L_S$ ist hier beispielsweise in mehrere über den Umfang des Verbrauchers K verteilte Einzelinduktivitäten $L_{S1}$ bis $L_{Sn}$ aufgeteilt. Sie kann durch entsprechend dimensionierte Stromzuführungsbänder gebildet sein.

Die Koaxialleitung 5 besitzt eine Länge $\lambda/4$, wobei $\lambda$ die Wellenlänge der vom Generator erzeugten Arbeitsfrequenz ist. Sie transformiert daher den Widerstand $\vec{R}_K$ am Ausgang um den Faktor $Z^2/\vec{R}_K$, wobei Z der Wellenwiderstand und $\vec{R}_K$ der gesamte Verbraucherwiderstand nach Gleichung 3) ist. Somit ermöglicht die Erfindung, die beim Stand der Technik nötigen aufwendigen Einrichtungen zur Widerstandstransformation im Generator einzusparen.

Für die Bemessung des Wellenwiderstandes Z der Koaxialleitung 5 aus dem reellen Verbraucherwiderstand $R_K$ und dem gewünschten Arbeitswiderstand $R_A$ des Generators kann die folgende Gleichung eingesetzt werden:

$$Z=\sqrt{R_K \cdot R_A} \qquad\qquad 1)$$

Dabei bedeuten $R_K$ und $R_A$ bei den Arbeitsfrequenzen reelle Widerstände.

Der kapazitive Verbraucherwiderstand $\vec{X}_K$ stellt beim hier betrachteten Verbraucher K eine verlustbehaftete Kapazität dar, welche der Formel genügt:

$$\vec{X}_K=-j\frac{1}{\omega C_K}+\frac{1}{\omega C_K}\cdot\frac{1}{Q}. \qquad\qquad 2)$$

Um den Verbraucherwiderstand $\vec{X}_K$ dem Betrag nach zu verkleinern, wird dem Verbraucher K eine Serieninduktivität $L_S$ vorgeschaltet. Dadurch ergibt sich ein gesamter Verbraucherwiderstand $\vec{R}_K$ nach der Formel:

$$\vec{R}_K=-j\frac{1}{\omega C_K}+\frac{1}{\omega C_K}\cdot\frac{1}{Q}+j\omega L_S \qquad\qquad 3)$$

Die Serieninduktivität $L_S$ wird zur Bildung einer Serienresonanz bei der Arbeitsfrequenz auf die Verbraucherkapazität $C_K$ abgestimmt nach der Gleichung:

$$-j\frac{1}{\omega C_K}+j\omega L_S=0, \qquad\qquad 4)$$

so daß als Verbraucherwiderstand $\vec{R}_K$ für den durch die Koaxialleitung 5 fließenden Strom nur noch der Wirkwiderstand aus 3)

$$\frac{1}{\omega C_K}\cdot\frac{1}{Q}=R_K \qquad\qquad 5)$$

in Betracht gezogen werden muß. Dabei ist der Faktor Q von der Frequenz und dem Material des dielektrischen Stoffes abhängig und kann sich während der Behandlung ändern, z.B. durch ein Abdampfen von Feuchtigkeit aus dem dielektrischen Stoff. Wenn der Verbraucher K zeitlich unterschiedliche Kapazitätswerte $C_K$ aufweist, ist die Serieninduktivität $L_S$ vorteilhafterweise einstellbar. Für Behandlungen, bei denen regelmäßig ähnliche Änderungen der Kapazität $C_K$ des Verbrauchers eintreten, ist es vorteilhaft, daß die Induktivität automatisch entsprechend dieser Änderung der Kapazität so gesteuert wird, daß die Resonanzfrequenz zumindest annähernd konstant bleibt. Dieser Fall tritt beispielsweise bei Abdampfen

3

von Stoffen aus der behandelten Schicht auf, wenn dadurch die Dielektrizitätskonstante verändert wird. Ein ähnlicher Effekt tritt bei einer Veränderung der Schichtdicke infolge der Behandlung auf, wenn dadurch der Abstand der Kondensatorelektroden verändert wird.

Für die Trocknung von Leder ist eine Ausführungsform vorteilhaft, bei der die beiden Kondensator-elektroden 1 und 2 durch elektrisch nichtleitende, feuchtefeste Schichten geschützt sind und das zu trocknende Leder zwischen diese Schichten eingebracht wird. Dabei ist es nicht erforderlich, daß die Schichten unmittelbar aufeinander liegen, vielmehr kann beispielsweise Luft zwischen den Schichten vorhanden sein. Dadurch ist es beispielsweise auch möglich, die zu behandelnden Stoffe auf einem Förderband zwischen den Kondensator-elektroden mit einer für die Behandlung ausreichend geringen Geschwindigkeit hindurchzuführen.

Eine rationell arbeitende Ausführungsform ist gegeben, wenn der Generator eine HF-Spannung von zumindest 10 $kV_S$ und eine HF-Leistung von zumindest 40 kW abgeben kann und wenn der Arbeitswiderstand $R_A$ zwischen etwa 1 kΩ und 1,5 kΩ liegt. In diesen Bereich fällt z.B. eine Ausführungsform mit einer Kondensatorfläche von 5 m² und einem Elektrodenabstand von 13 mm und mit Leder als dielektrischer Schicht 3. Die beiden Elektroden 1, 2 sind hierbei mit etwa 6 mm starken Gummi-Auflagen 4 abgedeckt, zwischen die das etwa 1 mm starke Leder als dielektrische Schicht 3 eingebracht wird. Diese Ausführung ermöglicht eine schnelle und schonende Trocknung des Leders.

Daraus ergibt sich in Falle einer Serienresonanz ein Verbraucherwiderstand von 0,014 Ω. Soll ein Generatorwiderstand von $R_A$ von 1,2 kΩ erreicht werden, so ergibt sich aus Gleichung 1) ein Wellenwiderstand Z von etwa 4 Ω.

Eine vorteilhafte Dimensionierung der Koaxialleitung ergibt sich bei einer Arbeitsfrequenz von 13,5 MHz, da hierbei die Leitungslänge 5 m beträgt.

Bei Bedarf kann anstelle der Leitungslänge von λ/4 auch eine Leitungslänge von λ/4+mλ/2 verwendet werden.

## Patentansprüche

1. Vorrichtung zum Aufheizen einer Schicht aus dielektrischem Material mittels Hochfrequenz, bestehend aus einem Hochfrequenzgenerator (G), einem niederohmigen Verbraucher (K) und einer Zuleitung (5) zwischen dem HF-Generator und dem Verbraucher, bei der der Verbraucher (K) aus zwei Elektroden (1, 2) besteht, die einen Kondensator bilden, bei der die Zuleitung (5) als Koaxialleitung (6, 7) ausgebildet ist und eine Länge von einem Viertel der Wellenlänge (λ/4) der Arbeitsfrequenz des HF-Generators bzw. ein ungeradzahliges Vielfaches davon aufweist, bei der zwischen die Koaxialleitung (5) und den Verbraucher (K) eine Serieninduktivität ($L_S$) geschaltet ist, die den kapazitiven Anteil des Widerstandes des Verbrauchers (K) bei der Arbeitsfrequenz des HF-Generators kompensiert, und bei der die Koaxialleitung (5) ohne Zwischenschaltung eines Parallelresonanzkreises direkt an die HF-Generatorröhre (G) angeschlossen ist.

2. Vorrichtung nach Anspruch 1, dadurch gekennzeichnet, daß die Serieninduktivität ($L_S$) einstellbar ist.

## Revendications

1. Dispositif pour chauffer une couche d'un matériau diélectrique à l'aide d'une haute fréquence, caractérisé par un générateur à haute fréquence (G), un appareil d'utilisation (K) de faible valeur ohmique et un conducteur d'alimentation (5) disposé entre le générateur à haute fréquence et l'appareil d'utilisation, et dans lequel l'appareil d'utilisation (K) est constitué de deux électrodes (1, 2) formant un condensateur, le conducteur d'alimentation (5) est réalisé sous la forme d'une ligne coaxiale (6, 7) et possède une longueur égale à un quart de la longueur d'onde (λ/4) associée à la longueur de travail du générateur à haute fréquence, ou à un multiple impair de cette valeur, entre la ligne coaxiale (5) et l'appareil d'utilisation (K) est branchée une inductance série ($L_S$), qui compense la partie capacitive de la résistance de l'appareil d'utilisation (K) pour la fréquence de travail du générateur à haute fréquence, et la ligne coaxiale (5) est raccordée directement au tube du générateur à haute fréquence (G), sans le montage intercalé d'un circuit résonnant parallèle.

2. Dispositif suivant la revendication 1, caractérisé par le fait que l'inductance série ($L_S$) est réglable.

## Claims

1. Arrangement for heating up a layer of dielectric material by means of high frequency, consisting of a high frequency generator (G), a low-resistance load (K) and a feed line (5) between the HF generator and the load, in which the load (K) consists of two electrodes (1, 2) which form a capacitor, in which the feed line (5) is formed as a coaxial line (6, 7) and has a length of one quarter of the wavelength (λ/4) of the operating frequency of the HF generator or an odd multiple thereof, in which there is connected between the coaxial line (5) and the load (K) a series inductance ($L_s$) which compensates the capacitive portion of the resistance of the load (K) at the operating frequency of the HF generator and in which the coaxial line (5) is connected directly to the HF generator tube (G) without interconnection of a parallel resonant circuit.

2. Arrangement according to claim 1, characterised in that the series inductance ($L_s$) is adjustable.

## FIG 1

## FIG 2